# EUROPEAN PATENT APPLICATION

(11) **EP 2 338 394 A1**
(43) Date of publication of application: **29.06.2011**
(21) Application number: 09180805.5
(22) Date of filing: 28.12.2009
(51) Int. Cl.: A47J 43/07

(54) **Beater assembly and kitchen appliance with a beater assembly**

(71) Applicant: Koninklijke Philips Electronics N.V., 5621 BA Eindhoven (NL)
(72) Inventor: Unteregger Johann, 5600 AE, Eindhoven (NL); Egger, Christian, 5600 AE, Eindhoven (NL)
(74) Representative: Damen, Daniel Martijn

(57) **Abstract**

A beater assembly (100) comprises a drive shaft (101) having a distal end (102) that can be coupled to a driving member. The drive shaft (101) defines a longitudinal axis (A-A) about which the beater assembly (100) is rotatingly drivable. A first member (104) is coupled to the drive shaft (101) and comprises an arm section (104a) that extends away from the drive shaft (101). A second member (107) is coupled to the drive shaft (101) distanced from the first member (104). The second member (107) comprises an arm section (107a) that extends away from the drive shaft (101). A beater member (105) is provided that has a first distal end (105a) that is coupled to the arm section (104a) of the first member (104). The beater member (105) extends between the arm section (104a) of the first member (104) and the arm section (107a) of the second member (107).

## Description

### FIELD OF THE INVENTION

The present invention relates to a beater assembly. The present invention further relates to a kitchen appliance provided with a beater assembly.

### BACKGROUND OF THE INVENTION

Beater assemblies, for example for use with food processors, or more generally, kitchen appliances are widely known and can be used for mixing foodstuffs for example. Commonly, such beater assemblies are attachable to a drive motor.

An example of a known beater assembly for use with a kitchen appliance having a bowl is a double-balloon beater. Such a beater assembly comprises two balloon-type beaters that are each, preferably, rotatably attached to opposing distal ends of an elongate carrier element. The carrier element may be coupled to a drive shaft, which in turn may be coupled to a driving motor, or the carrier element may be provided with coupling means that can couple with a drive shaft that is driveable by a drive motor. The balloon-type beaters extend parallel to the drive shaft. During use the two balloon-type beaters are rotated about a longitudinal axis defined by the drive shaft and thus describe a circular movement around the longitudinal axis. The known beater assembly is of a simple design, making it a cost-effective beater assembly.

A concern of the known beater assembly is that a central area of the bottom surface of the bowl that contains the foodstuff is not covered by the rotating beaters. This area is a circular area around the drive axis. This is a result of the fact that a clearance between the outer circumference of the beaters and the drive shaft must exist, on the one hand to get good mixing results and on the other hand to avoid that the rotating beaters contact the drive shaft during operation.

The above concern is addressed in United States patent document US 2007/0064523 which discloses a beater assembly for a kitchen appliance having a mixing bowl. The beater assembly comprises two separately driven and counter-rotating balloon-type beaters. Each balloon-type beater has its own drive shaft which is adapted to be coupled to a drive motor of the kitchen appliance. The beaters further comprise a wire shaped beater head, which stirs or mixes foodstuff contained in the bowl during operation, i.e. when the beater is driven to rotate around its drive shaft. The kitchen appliance of US 2007/0064523 comprises a rotating turntable on which the bowl is located so that the bowl rotates during use independent of the rotation of the beaters.

US 2007/0064523 proposes to provide the beater that is located nearest to the central longitudinal axis of the kitchen appliance with a pair of opposing blades, or urging means, that are arranged to urge foodstuff that is located beneath the beater on the bottom of the bowl in an upward direction so as to bring the foodstuff into contact with the rest of the beater. The opposing blades are part of the wire-shaped beater body of the respective beater.

The proposed solution of US 2007/0064523 requires a complex and expensive arrangement of separately driven counter-rotating beaters in combination with a rotatable turntable for the bowl, which turntable requires drive means and associated control means, adding to the complexity and costs of the kitchen appliance. Also providing one of the beaters with said urging means reduces the effectiveness of said beater, thus providing less optimal mixing results.

Furthermore, the use of separate beaters having separate drive shafts gives rise to mechanical instabilities during operation, in particular when relative heavy foodstuff such as dough is processed.

### OBJECT OF THE INVENTION

In view of the above it would be desirable to provide a beater assembly of the double-balloon beater type that addresses one or more of the concerns of the known double-balloon beater, while maintaining the advantageous properties thereof. Further, it would further be desirable to provide a beater assembly that has improved mechanical properties.

### SUMMARY OF THE INVENTION

According to a first main embodiment of the invention there is provided a beater assembly which comprises a drive shaft having a distal end that can be coupled to a driving member. The drive shaft has an upper part and a lower part, which drive shaft defines a longitudinal axis of the beater assembly about which the beater assembly is rotatingly drivable by the driving member. The assembly further comprises a first member that is coupled to the drive shaft near the upper part thereof, the first member comprising an arm section that extends away from the drive shaft. The assembly further comprises a second member that is coupled to the drive shaft near the lower part thereof and distanced from the first member in longitudinal direction. The second member comprises an arm section that extends away from the drive shaft. Further, a beater member is provided having a first distal end that is coupled to the arm section of the first member. The beater member extends between the arm section of the first member and the arm section of the second member. It is to be noted that the beater assembly according to the invention can be used either top driven or bottom driven. In case top driven, the end of the drive shaft at the upper part of the drive shaft will be coupled to a drive member. In case bottom driven, the end of the drive shaft at the lower part of the drive shaft will be coupled to a drive member.

During use of the beater assembly according to the present invention, the arm section of the second member will be located near a bottom part of a receptacle or bowl containing foodstuff to be mixed, stirred or whisked, as the second member is coupled to the drive shaft of the assembly at its lower part. Hence, the second member and in particular the arm section thereof will be in contact with foodstuff that is present between the beater member and the drive shaft of the beater assembly during operation. As the arm section rotates with the rotating drive shaft of the beater assembly, the rotational movement of the arm section will urge at least some of the foodstuff towards the beater member. Hence, the area that is effectively covered with the beater assembly is increased in comparison with the beater assemblies known from the prior art.

In an embodiment the arm section of the first member is provided with a coupling member that is adapted to rotatingly couple the beater member thereto. In this manner the beater member can rotate during operation which improves performance of the beater assembly. Rotation of the beater member is caused by the viscosity of the foodstuff that is being processed.

In an embodiment the first member and the second member extend in a plane that includes the longitudinal axis of the beater assembly. This provides mechanical stability of the beater assembly irrespective of the direction of rotation of the beater assembly.

In an embodiment the beater member has an axis of rotation, that extends substantially parallel to the longitudinal axis of the beater assembly, this allows for an easy auto-rotation of the beater member irrespective of the direction of rotation of the beater assembly.

In an embodiment the second member is, at least partly, formed of strip-shaped material and extends, at least partly, in a plane that is substantially perpendicular to the longitudinal axis of the beater assembly. This reduces weight and also improves the urging action of the arm section of the second member.

In an embodiment the first carrier arm and the second carrier arm of the first carrier are, at least partly, formed of strip material that extends in a plane that is substantially perpendicular to the longitudinal axis of the beater assembly. This reduces weight and also improves accessibility of the beater assembly for a user.

In an embodiment the first member is detachably coupled to the drive shaft, and/or the second member is detachably coupled to the drive shaft. These embodiments allow the different parts of the beater assembly to be cleaned separately. Furthermore, this allows for different types and different sizes of members to be used, improving the versatility of the beater assembly.

In an embodiment the first member and/or the second member can be coupled to the drive shaft along different locations in longitudinal direction. This allows the use of beater members of different shapes and sizes, further improving the versatility of the beater assembly.

In an embodiment the beater member comprises a second distal end that is coupled to the arm section of the second member, such that the beater member is also supported by the second member which improves mechanical strength and life of the beater assembly. Furthermore, this contributes in an improved mechanical stability of the beater assembly during use.

In an embodiment the arm section of the second member is provided with a coupling member that is adapted to rotatingly couple the beater member thereto. In this manner the beater member can rotate during operation which improves performance of the beater assembly. Rotation of the beater member is caused by the viscosity of the foodstuff that is being processed.

In an embodiment the first member comprises a further arm section that extends away from the drive shaft in a direction different than the other arm section of the first member, the second member comprises a further arm section that extends away from the drive shaft in a direction different than the other arm section of the second member, and a further beater member is provided, having a first distal end that is coupled to the further arm section of the first member and which further beater member extends between the arm section of the first member and the arm section of the second member. This provides a second beater member in the beater assembly, which improves effectiveness of the beater assembly, as well as improves the speed of the beater assembly in processing foodstuff.

In an embodiment the further arm section of the first member is provided with a coupling member that is adapted to rotatingly couple the further beater member thereto. In this manner the further beater member can rotate during operation which improves performance of the beater assembly.

In an embodiment the further beater member has an axis of rotation that extends substantially parallel to the longitudinal axis of the beater assembly. This allows for an easy auto-rotation of the further beater member irrespective of the direction of rotation of the beater assembly.

In an embodiment the further arm section of the second member is, at least partly, formed of strip-shaped material and extends, at least partly, in a plane that is substantially perpendicular to the longitudinal axis of the beater assembly. This reduces weight and also improves accessibility of the beater assembly for a user.

In an embodiment the further beater member comprises a second distal end that is coupled to the further arm section (107b) of the second member. This improves mechanical stability of the beater assembly.

In an embodiment the further arm section of the second member is provided with a coupling member that is adapted to rotatingly couple the further beater member thereto, such that both beater members are rotatable which further improves the operation of the beater assembly.

In an embodiment the first member is, at least partly, formed of strip-shaped material and extends, at least partly, in a plane that is substantially perpendicular to the longitudinal axis of the beater assembly. This further reduces the weight of the beater assembly.

In a second main embodiment of the invention a beater assembly is provided which comprises a drive shaft having a distal end that can be coupled to a driving member, the drive shaft having an upper part and a lower part. The drive shaft defines a longitudinal axis of the beater assembly about which the beater assembly is rotatingly drivable by the driving member. Further a support member is provided which is coupled to the lower part of the drive shaft. The support member comprises an arm section that extends away from the drive shaft. A beater member is provided which has a distal end that is coupled to the arm section of the support member, wherein the beater member extends from the arm section towards the upper part of the drive shaft. With this embodiment the support member both acts as a carrier for the beater member and as an urging means for foodstuff. This improves simplicity of the beater assembly.

As indicated below, further embodiments of the second main embodiment according to the invention add ― like in the first main embodiment - similar elements thereto and provide the same, or at least equivalent advantages.

In a further embodiment of the second main embodiment, the arm section of the support member is provided with a coupling member that is adapted to rotatingly couple the beater member thereto. In this manner the beater member can rotate during operation which improves performance of the beater assembly. Rotation of the beater member is caused by the viscosity of the foodstuff that is being processed.

In a further embodiment of the second main embodiment, the beater member has an axis of rotation, that extends substantially parallel to the longitudinal axis of the beater assembly, this allows for an easy auto-rotation of the beater member irrespective of the direction of rotation of the beater assembly.

In a further embodiment of the second main embodiment, the support member is, at least partly, formed of strip-shaped material and extends, at least partly, in a plane that is substantially perpendicular to the longitudinal axis of the beater assembly. This reduces weight and also improves the urging action of the arm section of the second member.

In a further embodiment of the second main embodiment, the support member is detachably coupled to the drive shaft. This embodiment allows the different parts of the beater assembly to be cleaned separately. Furthermore, this allows for different types and different sizes of members to be used, improving the versatility of the beater assembly.

In a further embodiment of the second main embodiment, the support member comprises a further arm section that extends away from the drive shaft in a direction different than the other arm section of the suport member, and wherein a further beater member is provided, having a distal end that is coupled to the further arm section of the support member and wherein the further beater member extends from the further arm section towards the upper part of the drive shaft. This provides a second beater member in the beater assembly, which improves effectiveness of the beater assembly, as well as improves the speed of the beater assembly in processing foodstuff.

In a further embodiment of the second main embodiment, the further arm section of the support member is provided with a coupling member that is adapted to rotatingly couple the further beater member thereto. In this manner the further beater member can rotate during operation which improves performance of the beater assembly.

In a further embodiment of the second main embodiment, the further beater member has an axis of rotation that extends substantially parallel to the longitudinal axis of the beater assembly. This allows for an easy auto-rotation of the further beater member irrespective of the direction of rotation of the beater assembly.

In a further aspect of the invention a kitchen appliance is provided, which kitchen appliance comprises a base member, said base member housing a drive motor, which drive motor comprises a driving member;
a receptacle for receiving foodstuff, the receptacle being positionable on the base member, and a beater assembly according to any of the previous claims, the beater assembly being positionable in the receptacle, so as to drivingly engage the driving member. Such a kitchen appliance exhibits an improved performance in comparison with known kitchen appliances comprising a known beater assembly.

### BRIEF DESCRIPTION OF THE DRAWINGS

Further advantageous embodiments of the beater assembly according to the invention and a kitchen appliance provided with such a beater assembly are described in the claims and in the following description with reference to the drawing, in which:
Fig. 1A is a perspective view of a beater assembly according to a first embodiment;
Fig. 1B is an expanded perspective view of the assembly of Figure 1 with a detachable first member;
Fig. 2A is a partly cut-away perspective view of a receptacle with the beater assembly of Figure 1A prior to positioning thereof;
Fig. 2B is a partly cut-away perspective view of the receptacle with the beater assembly of Figure 1A positioned therein;
Fig. 3 is a schematic view of a path of a beater member;
Fig. 4 is cross-sectional view of a second embodiment of a beater assembly;
Fig. 5A is a perspective view of a third embodiment of a beater assembly according to the invention having a single beater member;
Fig. 5B is a partly cut-away perspective view of the receptacle with the beater assembly of Figure 5A positioned therein;
Fig. 6 is a side-view of a further embodiment of a beater assembly according to the Invention with angled beater members, and
Fig. 7 is a perspective view of a further embodiment of a beater assembly according to the invention having a single bottom support member.

### DETAILED DESCRIPTION OF EXAMPLES

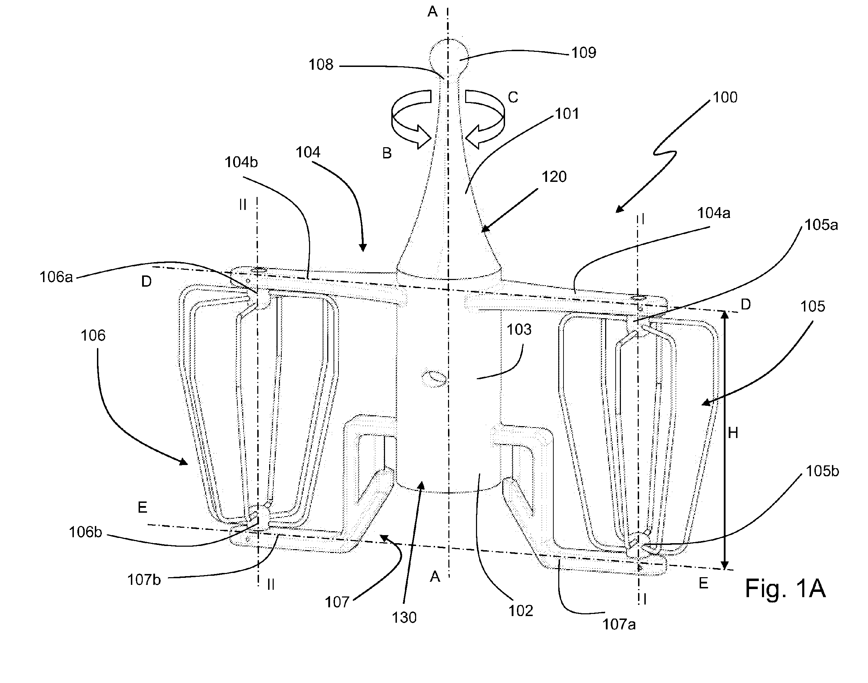

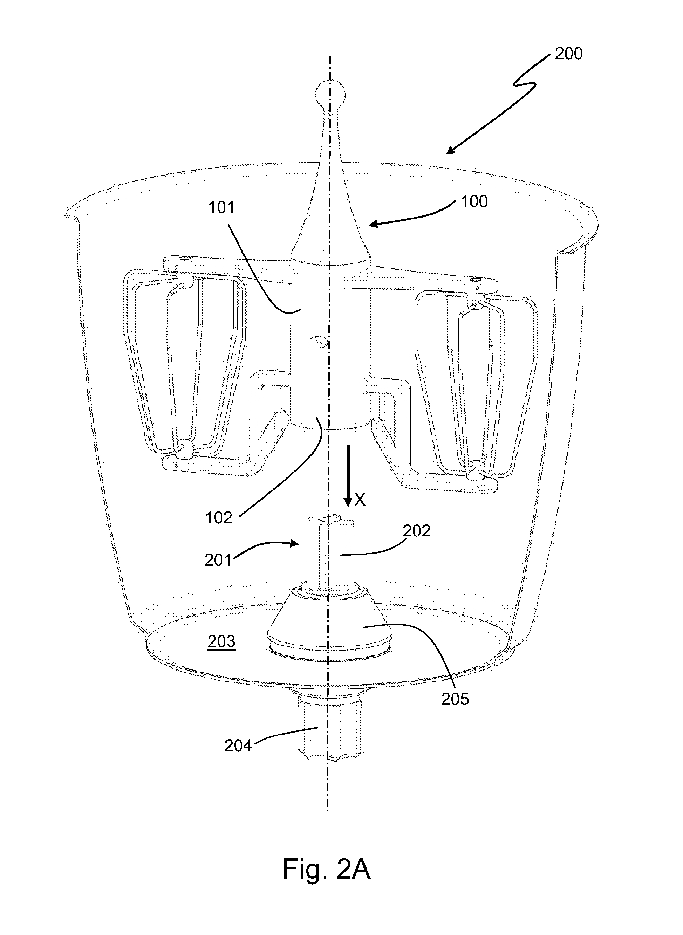

Figure 1A shows a perspective view of a beater assembly according to a first embodiment of the invention. The beater assembly 100 comprises a drive shaft 101 which comprises a first distal end 102. The first distal end 102 is arranged to be coupled to a drive member 201 (see Figure 2A). The drive shaft 101 defines a longitudinal axis A ―A about which the beater assembly 100 can be rotated, i.e. the beater assembly 100 is rotatingly drivable about the longitudinal axis A-A by the drive member 201. Further, as is indicated by means of arrows B and C, the beater assembly 100 can be rotated in a counter-clockwise and in a clockwise direction. In the embodiment of Figure 1A, the drive shaft 101 comprises a central tubular part 103. Attached to the central tubular part 103 of the drive shaft 101 a first member 104 is coupled. The first member 104 comprises a first arm section 104a which extends away from the drive shaft 101. Preferably the arm section 104a extends in a substantial radial direction away from the central tubular part 103 of the drive shaft 101. The first member 104 further comprises a second arm section 104b, which is of a similar design as the first arm section 104a and which also extends away from the drive shaft 101, preferably in a substantial radial direction away from the central tubular part 103 of the drive shaft 101, but in an opposite direction to the first arm section 104a. In fact, both carrier arms 104a and 104b extend along a line D-D. Hence, both arm section 104a, 104b are equidistantly or evenly distributed around the longitudinal axis A-A of the beater assembly 100, i.e. a distribution angle of 180 degrees is used. It is noted however, that this is not essential and other distribution angles are also possible. In fact, it is also possible to couple more than two arm sections to the drive shaft 101 using a distribution angle of about 120 degrees for example. Preferably, the first arm section 104a and the second arm section 104b of the first member 104 are, at least partly, formed of a strip-shaped material.

The beater assembly 100 further comprises, in the embodiment of Figure 1A, a first beater member 105 and a second beater member 106. The first beater member 105 is coupled to the first arm section 104a by means of a first distal end 105a of said beater member 105. The second beater member 106 is coupled to the second arm section 104b by means of a first distal end 106a of said beater member 106. The beater members 105, 106 as shown in Figure 1A are so-called wire beaters which comprise one or more wire loops. Other types of beater members are also conceivable, such as hook shaped beaters for processing dough etcetera. In the example shown, the beater members 105, 106 comprise three wire loops. It shall be clear to a person skilled in the art, that other numbers of wire loops are also possible, depending on the requirements or foodstuff to be processed. The example of Figure 1A is particularly suitable for stirring cream or egg-white for example.

Attached to the central tubular part 103 of the drive shaft 101 a second member 107 is coupled. The second member 107 comprises a first arm section 107a which extends away from the drive shaft 101, preferably in a substantial radial direction away from the central tubular part 103 of the drive shaft 101. The second member 104 further comprises a second arm section 107b which also extends away from the drive shaft 101, preferably in a substantial radial direction away from the central tubular part 103 of the drive shaft 101, but in an opposite direction to the first carrier arm 107a. In fact, both carrier arms 107a and 107b extend along a line E-E. Similarly as what has been described with respect to the first member 104, the arm section 107a, 107b of the second member 107 do not need to be evenly distributed around the longitudinal axis A-A, neither is the number of arm sections of the second member 107 limited to the number as shown in Figure 1A. As can be seen, the second member 107 is coupled to the drive shaft 101 near the first distal end 102 of the drive shaft 101. Preferably, the first arm section 107a and the second arm section 107b of the second member 107 are, at least partly, formed of strip material.

The first beater member 105 and the second beater member 106 each comprise a second distal end 105b, 106b respectively that is located diametrically opposite the respective first distal ends 105a, 106a. The first beater member 105 is coupled to the second arm section 107a of the second member 107 by means of the second distal end 105b of said beater member 105. The second beater member 106 is coupled to the second arm section 107b of the second member 107 by means of the second distal end 106b of said beater member 106. Hence, the beater members 105, 106 extend from the respective first sections 104a, 107a to second sections 104b, 107b. In the embodiment of Figure 1A, lines D-D and E-E along which the first member 105 respectively the second member 107 extend with their respective arm sections, span a plane that is (substantially) parallel to the longitudinal axis A-A, or put differently, lines D-D and E-E extend (substantially) perpendicular to the longitudinal axis A-A.

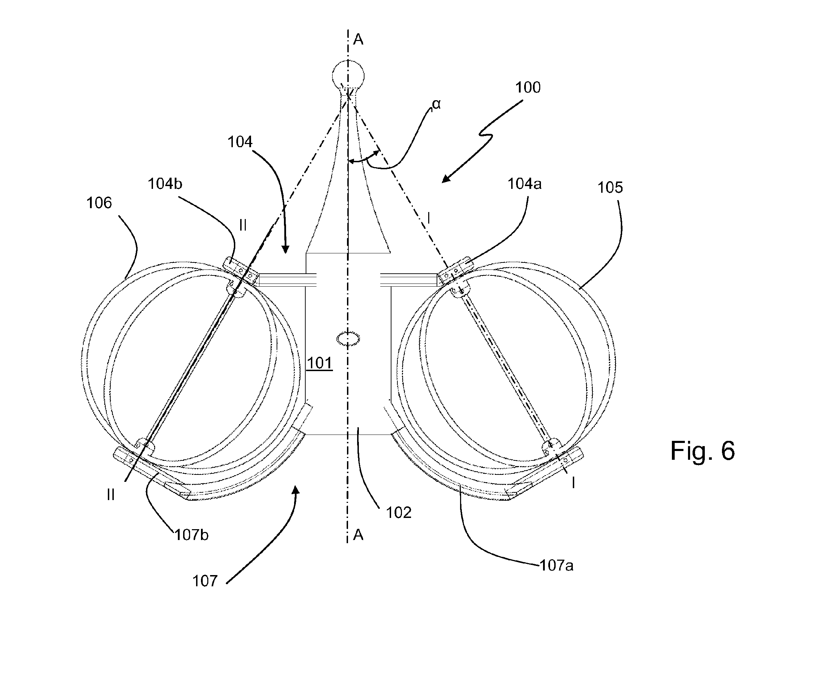

As can be seen in Figure 1A, the first and second arm sections 104a, 104b of the first member 104 are distanced from the first and second arm sections 107a, 107b of the second member 107, such that the beater members 105, 106 extend between said members. Furthermore, due to the orientation of the respective arm sections, the beater members 105, 106 extend substantially parallel to the longitudinal axis A-A. It is however also conceivable that the beater members 105, 106 extend along the longitudinal direction under an angle (see Figure 6). An alternative orientation can for example be achieved by a turned or twisted relative position between the first member 104 and the second member 107.This has not been shown in the drawing, but it will be clear to a person skilled in the art how to achieve that. A different alternative is shown with respect to Figure 6.

In the example of Figure 1A the first member 104 is coupled with the drive shaft 101 at an upper part 120 thereof, whilst the second member 107 is coupled with the drive shaft 101 at a lower part 130 thereof.

Preferably, the first beater member 105 and the second beater member 106 are rotatably coupled to the first member 104 respectively to the second member 107. To achieve that, the respective arm sections 104a, 104b, 107a and 107b are each provided at their free ends with the possibility of rotatingly coupling with the respective beater member 105, 106. Hence, in the example of Figure 1A the first beater member 105 comprises an axis of rotation I-I that extends (substantially) parallel to the longitudinal axis A-A, and the second beater member 106 comprises an axis of rotation II-II that extends (substantially) parallel to the longitudinal axis A-A. As will be explained in more detail below, the beater members 105, 106 will rotate about their respective rotational axis I-I, II-II. This improves the performance of the beater assembly 100.

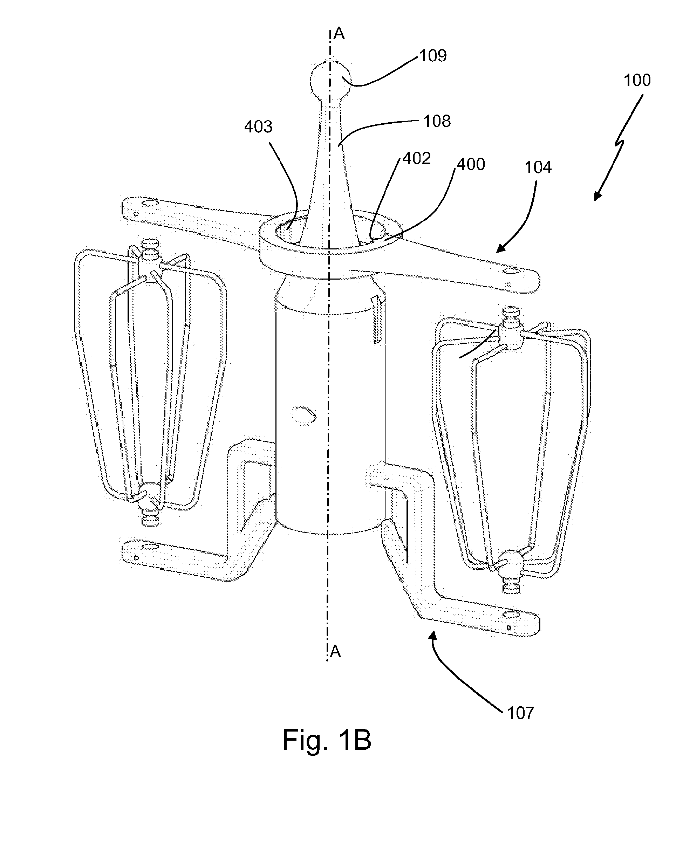

In a preferred embodiment of the beater assembly 100 according to the present invention, the first member 104, the second member 105 or both are detachably coupled to the drive shaft 103. This can for example be done by means of a snap connection between the respective arm sections and the drive shaft 103. However, other means of providing a releasable connection between the arm sections and the drive shaft is also possible. It is also possible that the members 104, 105 each formed as a single part that is as a whole attachable to the drive shaft 101. This is shown for the first member 104 in Figure 1B, wherein the beater assembly 100 is shown in an expanded perspective view and comprises a detachable first member 104. The first member 104 comprises a circular connection part 400 that has in inner circumference that can be placed around the outer circumference of the tubular part 103 of the drive shaft 101. The tubular part 103 is provided with a two slots or grooves 401 (of which only one is visible in Figure 1B) that extends in longitudinal direction and which are each arranged to house one of notches 402, 403 which are provided on the inner circumference of the circular connection part 400. The co-operation of the grooves 401 and the respective notches 402, 403 ensure that the first member 104 will not rotate about the longitudinal axis A-A during use of the beater assembly 100. A similar solution can be applied for the second member 107.

In a further preferred embodiment the first member 104, the second member 105 or both are attachable to the drive shaft 103 along different positions thereof. In this manner it becomes possible to use beater members of different lengths (indicated with H in Figure 1A). In other words, the beater assembly 100 becomes adjustable. This can for example be achieved by providing the groove 401 with depressions at certain locations along its length and at the same time providing the notches 402, 403 with small protrusions that extend radially inward. In this manner a (releasable) snap connection can be provided that allows for attachment at different positions along the drive shaft 103.

For ease of manipulation the beater assembly 100 may be provided with gripping means 109 which are provided at a second distal end 108 of the drive shaft 103. In the example of Figure 1A and 1B the gripping means 109 are designed as a spherical knob or extension which makes it easy to be gripped by a user. However, other designs are also possible.

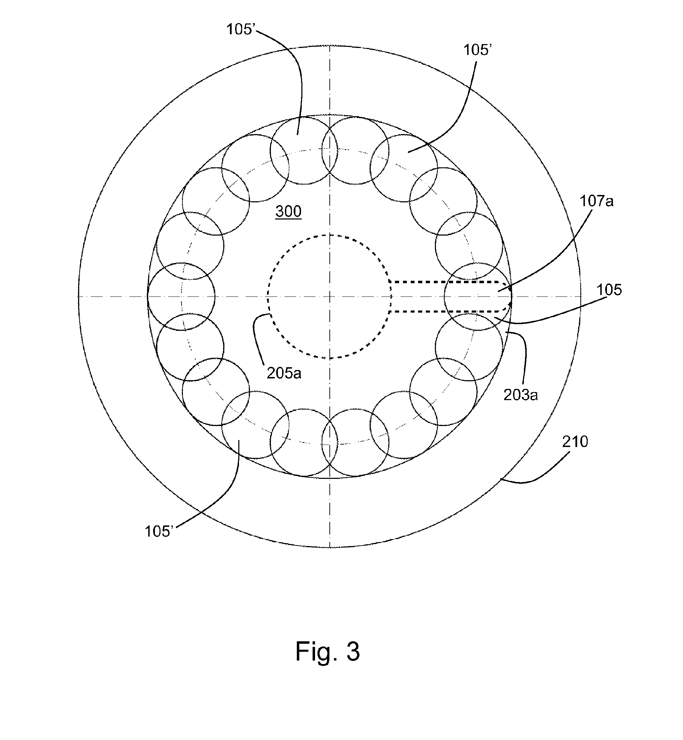

It is noted here, that it is not essential that the beater members 105, 106 are coupled to the second member 107. In fact, the urging effect during use that is achieved by the second member 107 is also achieved when the beater members 105, 106 are not attached thereto. Furthermore, in case that the beater members 105, 106 are not coupled with, and consequently not supported or carried by, the second member 107 and its respective arm section 107a, 107b, it is not essential that the arm sections 107a, 107b extend all the way up to the associated beater member 105, 106. As long as at least part of an area (refer to Figure 3) between the beater members 105, 106 and the cover part 205 is covered by the arm sections 107a, 107b of the second member 107, its urging effect will be present during use of the beater assembly 100.

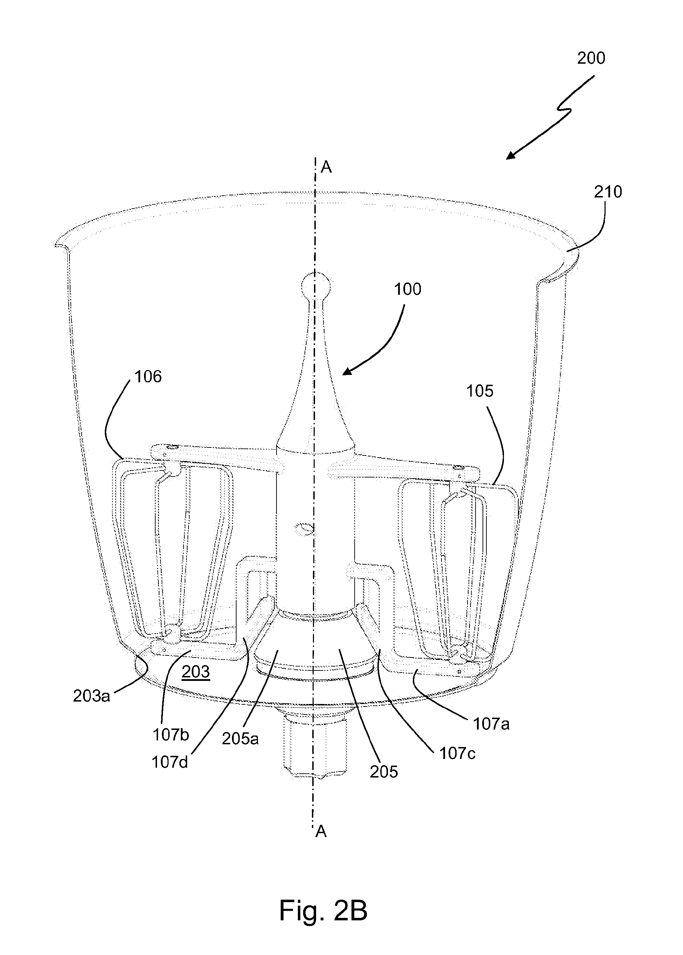

The beater assembly 100 according to the present invention is intended to be used in a kitchen appliance. Figures 2A and 2B show a part of such a kitchen appliance, and in particular it shows a kitchen appliance that comprises a receptacle or bowl 200 that is intended to be positioned on a base member (not shown) which houses a drive means, such as an electric drive motor (not shown). The receptacle 200 comprises a driving member 201 that is arranged to be detachably coupled to the first distal end 102 of the drive shaft 101 of the beater assembly 100. It is also conceivable that the second distal end 108 is used for driving the beater assembly 100 by means of a suitable driving member. This has not been shown. As can be seen, the driving member 201 has a first connection end 202 which has an outer profiled surface which is complementary with an inner profiled surface of the drive shaft 101 (not shown). The drive member 201 protrudes through a bottom section 203 of the receptacle 200 and ends in a second connection end 204. The second connection end 204 is adapted to be coupled to an electric drive motor for example that is housed in a base member (not shown) of the kitchen appliance. The second connection 204 end preferably is provided with a profiled outer surface. The receptacle 200 is designed to contain foodstuff during operation of the kitchen appliance. Hence, it should be avoided that said foodstuff spills from the receptacle 200 during operation. For that reason the drive member 201 is enclosed by a closure part 205 which extends in an upward direction, i.e. toward an interior of the receptacle 200.

Positioning of the beater assembly 100 in the receptacle 200 is executed by placing the first distal end 102 of the drive shaft 101 over the first connection end 202 of the driving member 201, while holding the gripping means 109, in a direction that is indicated with arrow X in Figure 2A. Removal of the beater assembly 100 is done by pulling the beater assembly 100 out of the receptacle 200 in opposite direction. The situation wherein the beater assembly 100 is positioned in the receptacle 200 is shown in Figure 2B.

As can be seen in Figure 2B, the receptacle 200 has a substantially flat bottom section 203. In the position of the beater assembly 100 shown in Figure 2B, i.e. its operational position, the first arm section 107a and the second arm section 107b extend across, and are positioned with a small amount of play above, the bottom section 203. Furthermore, they substantially extend between an outer circumference 205a of the closure part 205 and an outer circumference 203a of the bottom section 203. Hence, during use of the beater assembly 100 it will rotate about the longitudinal axis A-A and most of the area of the bottom section 203 of the receptacle 200 will be covered by the rotating arm sections 107a, 107b. This is also shown with reference to Figure 3.

Due to the design of the beater assembly 100 and the maximum dimensions of the beater members 105, 106 foodstuff that is located on an area 300 (see Figure 3) between the beater members 105, 106 and foodstuff that is located near the bottom section 203 cannot be reached by the beater members 105, 106 during use. During use however the first and second arm sections 107a, 107b extend, at least partly, over the bottom section 203 and will urge any foodstuff that is located there in an upward direction, i.e. in a direction towards the beater members 105, 106. The first arm section 107a and the second arm section 107b are preferably made from a strip material which improves the upward urging effect during operation. Further, the arm section 107a, 107b of the second member 107 comprise inclined sections 107c and 107d which closely follow the outer surface of the closure part 205. The inclined section 107c, 107d will urge any foodstuff that is located on the outer surface of the closure part 205 towards the beater members 105, 106.

In Figure 3 it is shown how the first arm section 107a covers the area 300 between the cover part 205 and the outer circumference 203a of the bottom section 203 of the receptacle 200. For ease of representation, only the first arm section 107a and the outline of the first beater member 105 are schematically shown. To show the area 300 more clearly, several discrete positions of the first beater member 105 during use have been shown as a circular pattern of outlines 105'.The outermost circle in Figure 3 corresponds to an upper rim 210 of the receptacle 200 (see also Figure 2B).

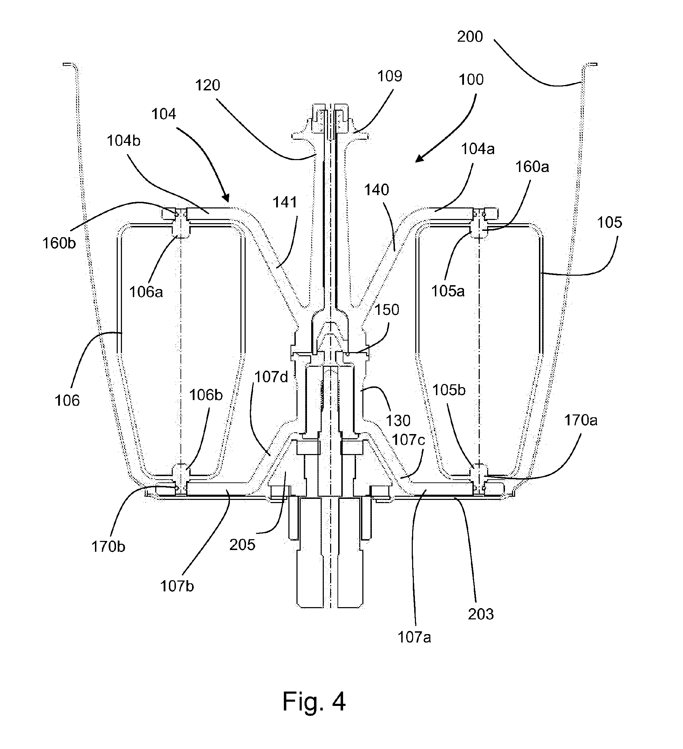

An alternative embodiment of the beater assembly 100 in its operational position in the receptacle 200 of the kitchen appliance is shown in Figure 4 in cross-section. The beater assembly 100 as shown in Figure 4 is in principle the same as the beater assembly as described heretofore, except for the following differences.

The beater assembly 100 of Figure 4 has an upper part 120 that carries the first member 104, and has a lower part 130 that carries the second member 107. The upper part 120 further comprises the gripping member 109 that is designed as a radially extending flange. The first member 104 comprises, in comparison with the first member 104 as shown in the previous, two arm sections 104a, 104b which are attached to the drive shaft 101 by means of angled arm portions 140 and 141 respectively. The provision of the angled arm portions 140, 141 allows the use of beater members 105, 106 that have a greater length (or height) than the beater members as shown in the previous Figures. Furthermore, the angled arm portions 140, 141 may assist during use in preventing foodstuff from moving upward and out of the operational area of the beater members 105, 106. Preferably, the upper part 120 and the lower part 130 of the beater assembly 100 of Figure 4 are detachably coupled to each other by means of coupling means 150.

As can be clearly seen in Figure 4, there is only minimal play between the first and second arm sections 107a, 107b of the second member 107 and the bottom section 203 of the receptacle 200. Also there exists minimal play between the inclined sections 107c and 107d and the outer surface of the closure part 205. Further it can be seen in Figure 4 that between the respective distal ends 105a, 106a and 105b, 106b bearings 160, 170 are provided which allow the beater members 105, 106 to rotate about their respective rotational axis I-I and II-II during operation.

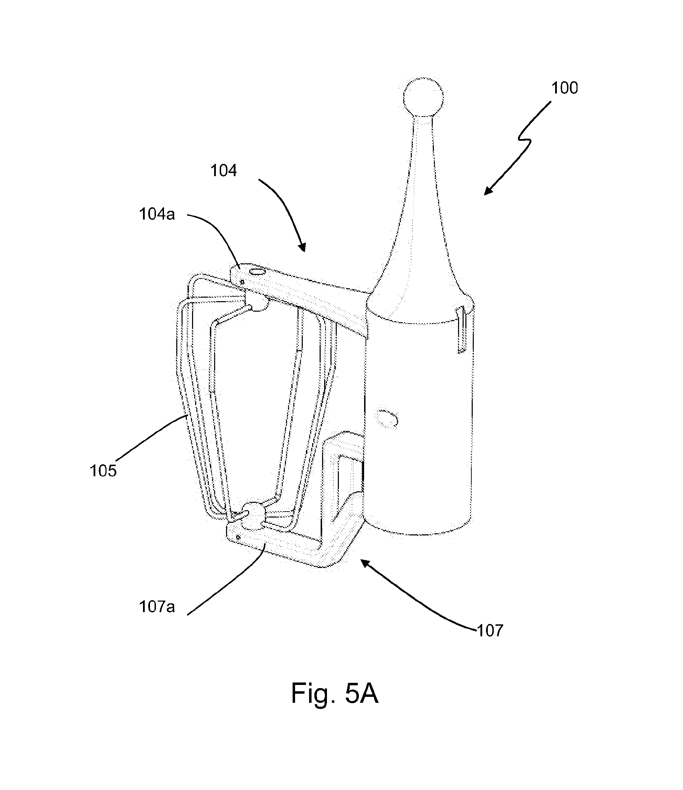

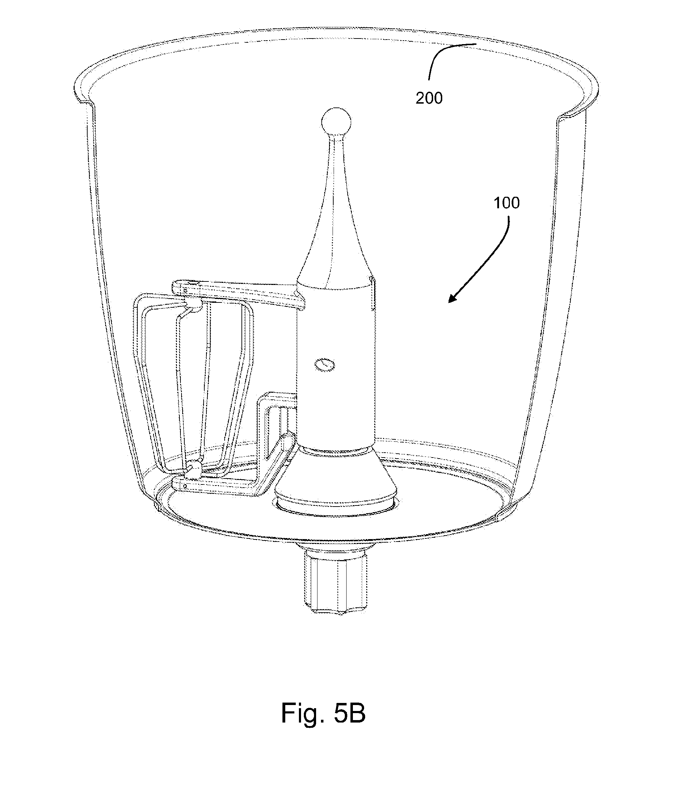

In the above description the beater assembly according to the invention comprises two beater members. Within the scope of the present invention it is also possible that the beater assembly comprises a different number of beater members such as three or four beater members. Preferably the beater members are evenly distributed about the longitudinal axis of the beater assembly to obtain a balanced beater assembly. However, this is not essential and even the use of only one beater member is conceivable. An embodiment of the beater assembly according to the present invention which comprises a single beater member only is shown in Figures 5A and 5B.

Figure 5A shows the beater member 100 in an embodiment wherein only a single beater member 105 is provided. Consequently, the beater assembly 100 only comprises a first member 104 that comprises a single arm section 104a and comprises a second member 107 that comprises a single arm section 107a. The operation and effects achieved with the beater assembly 100 as shown in Figure 5A are the same as for the beater assemblies as shown in the previous figures. The main difference resides in the speed of operation, where it is clear to a person skilled in the art that when more beater members are provided, the time required to process the foodstuff will be reduced. Figure 5B shows the beater assembly 100 of Figure 5A positioned in the receptacle 200. Positioning of the beater assembly 100 of Figure 5A takes place in the same manner as was described with respect to Figure 2A.

It is noted here, that it is not essential that the beater member 105 is coupled to the second member 107. In fact, the urging effect during use that is achieved by the second member 107 is also achieved when the beater member 105 is not attached thereto. Furthermore, in case that the beater member 105 is not coupled with, and consequently not supported or carried by, the second member 107 and its respective arm section 107a, it is not essential that the arm section 107a extends all the way up to the beater member 105. As long as at least part of an area (refer to Figure 3) between the beater member 105 and the cover part 205 is covered by the arm section 107a of the second member 107, its urging effect will be present during use of the beater assembly 100.

A further embodiment of the present invention is shown in Figure 6, in which embodiment the beater assembly 100 comprises two spherical beater elements 105, 106. As in the previous embodiments, the beater members 105, 106 have an axis of rotation I-I and II-II respectively. The beater members 105, 106 however, in particular their respective rotational axis I-I, II-II, are angled with respect to the longitudinal axis A-A. This is indicated in Figure 6 by an angle alpha (α). A further difference with the embodiments in the previous figures is, that the second member 107 comprises respective arm sections 107a, 107b which extend from the first distal end 102 of the drive shaft 101 in a curved manner ending in a straight part. The embodiment of Figure 6 can for example be used in combination with a receptacle having a non-flat bottom. Furthermore, the beater assembly 100 of Figure 6 may be provided with a different number of beater members as has been discussed above, for example a single beater member as shown in Figure 5A or three or more beater members, which are preferable evenly distributed about the longitudinal axis A-A.

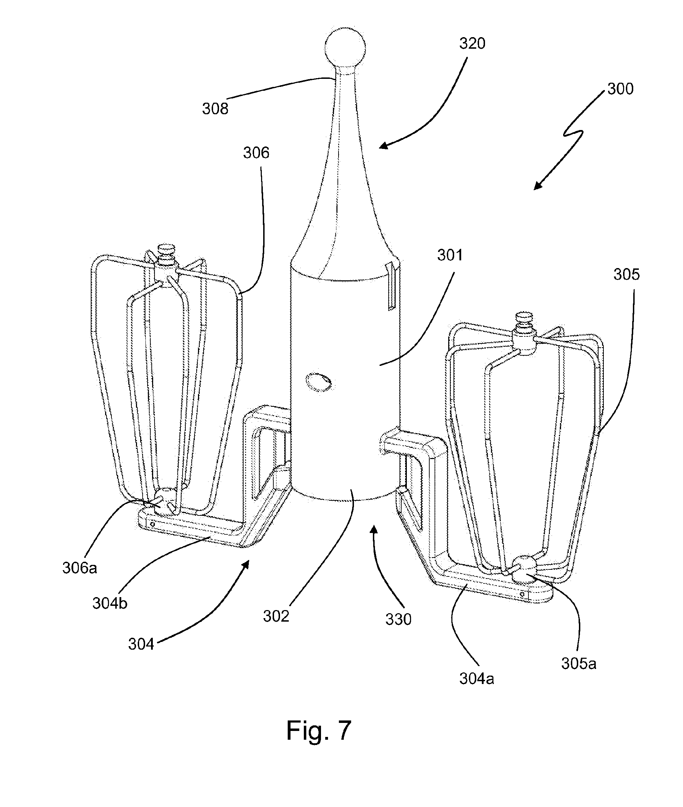

Yet a further embodiment of a beater assembly 300 according to the present invention is shown in Figure 7. The beater assembly 300 is similar in design as the beater assembly 100 shown in Figures 1A and 1B. The beater assembly 300 comprises a drive shaft 301 having a first distal end 302 that can be coupled to a driving member. The drive shaft 301 has an upper part 320 and a lower part 330. Similar to the previous embodiments the drive shaft 301 defines a longitudinal axis A-A of the beater assembly 300 about which the beater assembly 300 is rotatingly drivable. The beater assembly further comprises a single support member 304 that is coupled to the lower part 330 of the drive shaft 301. The support member 304 comprising a first arm section 304a and a second arm section 304b, which extend away from the drive shaft 301. Further two beater members 305 and 306 are provided, which beater members 305, 306 have respective distal ends 305a, 306a that are each coupled with one of the arm sections 304a, 304b. Both beater members 305, 306 extend from the respective arm section 304a, 304b towards the upper part 320 of the drive shaft 301.

The beater assembly 300 of Figure 7 may of course be provided with a different number of beater members as has been discussed above, for example a single beater member as shown in Figure 5A or three or more beater members, which are preferable evenly distributed about the longitudinal axis A-A.

Another option that fall within the scope of the present invention is, to provide the beater assembly with drive means that are arranged to rotatingly drive the beater members during operation, instead of depending on the possibility of auto-rotation of the beater members during operation.

Preferably the beater assembly without the beater members is manufactured from a plastic material, for example by means of (injection) moulding. However, other materials may also be used. Preferably, the materials used for manufacturing the beater assembly according to the invention are suitable for cleaning in a dishwasher.

In the above the beater assemblies according to the invention are suitable to be used in so-called bottom-driven kitchen appliances. However, the gist of the invention is of course also applicable to so-called top-driven kitchen appliances. Such embodiments are not specifically shown in the drawing, but it will be clear for a person skilled in the art, that no real modification of the beater assemblies according to the present invention is required to achieve that. In case top driven, the end of the drive shaft at the upper part of the drive shaft will be coupled to a drive member.

The present invention can also be described as worded in the following clauses:
1) A beater assembly (100), comprising:
   - a drive shaft (101) having a distal end (102, 108) that can be coupled to a driving member (201), the drive shaft (101) having an upper part (120) and a lower part (130), which drive shaft (101) defines a longitudinal axis (A-A) of the beater assembly (100) about which the beater assembly (100) is rotatingly drivable by the driving member (201);
   - a first member (104) that is coupled to the drive shaft (101) near the upper part (120) thereof, the first member (104) comprising an arm section (104a) that extends away from the drive shaft (101);
   - a second member (107) that is coupled to the drive shaft (101) near the lower part (130) thereof distanced from the first member (104) in longitudinal direction, the second member (107) comprising an arm section (107a) that extends away from the drive shaft (101), and
   - a beater member (105) having a first distal end (105a) that is coupled to the arm section (104a) of the first member (104) and which beater member (105) extends between the arm section (104a) of the first member (104) and the arm section (107a) of the second member (107).
2) The beater assembly (100) according to clause 1, wherein the arm section (104a) of the first member (104) is provided with a coupling member (160a) that is adapted to rotatingly couple the beater member (105) thereto.
3) The beater assembly (100) according to clause 1 or 2, wherein the first member (104) and the second member (107) extend in a plane that includes the longitudinal axis (A-A) of the beater assembly (100).
4) The beater assembly (100) according to clause 3, wherein the beater member (105) has an axis of rotation (I-I) that extends substantially parallel to the longitudinal axis (A-A) of the beater assembly (100).
5) The beater assembly (100) according to any of the previous clauses,
   wherein the second member (107) is, at least partly, formed of strip-shaped material and extends, at least partly, in a plane that is substantially perpendicular to the longitudinal axis (A-A) of the beater assembly (100).
6) The beater assembly (100) according to any of the previous clauses,
   wherein the first member (104) is detachably coupled to the drive shaft (101).
7) The beater member (100) according to any of the previous clauses,
   wherein the second member (107) is detachably coupled to the drive shaft (101).
8) The beater member (100) according to any of the previous clauses,
   wherein the first member (104) and/or the second member (107) can be coupled to the drive shaft (101) at different locations in longitudinal direction.
9) The beater assembly (100) according to any of the previous clauses,
   wherein the beater member (105) comprises a second distal end (105b) that is coupled to the arm section (107a) of the second member (107).
10) The beater assembly (100) according to clause 9, wherein the arm section (107a) of the second member (107) is provided with a coupling member (170a) that is adapted to rotatingly couple the beater member (105) thereto.
11) The beater assembly (100) according to any of the previous clauses,
   wherein
   - the first member (104) comprises at least one further arm section (104b) that extends away from the drive shaft (101) in a direction different than the other arm section (104a) of the first member (104),
   - the second member (107) comprises at least one further arm section (104b) that extends away from the drive shaft (101) in a direction different than the other arm section (107a) of the second member (107), and wherein a further beater member (106) is provided, having a first distal end (106a) that is coupled to the further arm section (104b) of the first member (104) and which further beater member (106) extends between the arm section (104b) of the first member (104) and the arm section (107b) of the second member (107).
12) The beater assembly (100) according to clause 11, wherein the further arm section (104b) of the first member (104) is provided with a coupling member (170a) that is adapted to rotatingly couple the further beater member (106) thereto.
13) The beater assembly (100) according to clause 11 or 12, wherein the further beater member (106) has an axis of rotation (II-II) that extends substantially parallel to the longitudinal axis (A-A) of the beater assembly (100).
14) The beater assembly (100) according to any of the clauses 11 to 13,
   wherein the further arm section (107b) of the second member (107) is, at least partly, formed of strip-shaped material and extends, at least partly, in a plane that is substantially perpendicular to the longitudinal axis (A-A) of the beater assembly (100).
15) The beater assembly (100) according to any of the clauses 11 to 14,
   wherein the further beater member (106) comprises a second distal end (106b) that is coupled to the further arm section (107b) of the second member (107).
16) The beater assembly (100) according to any of the clauses 11 to 15,
   wherein the further arm section (107b) of the second member (107) is provided with a coupling member (170b) that is adapted to rotatingly couple the further beater member (106) thereto.
17) The beater assembly according to any of the previous clauses, wherein the the first member (104) is, at least partly, formed of strip-shaped material and extends, at least partly, in a plane that is substantially perpendicular to the longitudinal axis (A-A) of the beater assembly (100).
18) Beater assembly (300), comprising:
   - a drive shaft (301) having a distal end (302, 308) that can be coupled to a driving member (201), the drive shaft (301) having an upper part (120) and a lower part (130), which drive shaft (301) defines a longitudinal axis (A-A) of the beater assembly (300) about which the beater assembly (300) is rotatingly drivable by the driving member (201);
   - a support member (304) coupled to the lower part (130) of the drive shaft (301), the support member (304) comprising an arm section (304a) extending away from the drive shaft (301), and
   - a beater member (305) having a distal end (305a) that is coupled to the arm section (304a) of the support member (304), wherein the beater member (305) extends from the arm section (304a) towards the upper part (120) of the drive shaft (301).
19) The beater assembly (300) according to clause 18, wherein the arm section (304a) of the support member (304) is provided with a coupling member (360a) that is adapted to rotatingly couple the beater member (305) thereto.
20) The beater assembly (300) according to clause 18 or 19, wherein the beater member (305) has an axis of rotation (I-I) that extends substantially parallel to the longitudinal axis (A-A) of the beater assembly (300).
21) The beater member (300) according to any of the clauses 18 to 20,
   wherein the support member (304) is, at least partly, formed of strip-shaped material and extends, at least partly, in a plane that is substantially perpendicular to the longitudinal axis (A-A) of the beater assembly (300).
22) The beater assembly (300) according to any of the clauses 18 to 21,
   wherein the support member (304) is detachably coupled to the drive shaft (301).
23) The beater assembly (300) according to any of the clauses 18 to 22, wherein - the support member (304) comprises a further arm section (304b) that extends away from the drive shaft (301) in a direction different than the other arm section (304a) of the support member (304), and wherein a further beater member (306) is provided, having a distal end (306a) that is coupled to the further arm section (304b) of the support member (104) wherein the further beater member (306) extends from the further arm section (304b) towards the upper part (120) of the drive shaft (301).
24) The beater assembly (300) according to clause 23, wherein the further arm section (304b) of the support member (304) is provided with a coupling member (370a) that is adapted to rotatingly couple the further beater member (306) thereto.
25) The beater assembly (300) according to clause 23 or 24, wherein the further beater member (306) has an axis of rotation (II-II) that extends substantially parallel to the longitudinal axis (A-A) of the beater assembly (300).
26) A kitchen appliance, comprising:
   - a base member, said base member housing a drive motor, which drive motor comprises a driving member (201);
   - a receptacle (200) for receiving foodstuff, the receptacle (200) being positionable on the base member, and
   - a beater assembly (100, 300) according to any of the previous clauses, the beater assembly (100, 300) being positionable in the receptacle (200), so as to be drivingly engage the driving member (201).

While the subject-matter has been illustrated in the drawings and the foregoing description, such illustration and description are to be considered illustrative or exemplary and not restrictive; the subject-matter is not limited to the disclosed embodiments. Other variations to the disclosed embodiments can be understood and effected by those skilled in the art of practicing the claimed subject-matter, from a study of the drawings, the disclosure and the appended claims. Use of the verb "comprise" and its conjugations does not exclude the presence of other elements other than those stated in a claim or in the description. Use of the indefinite article "a" or "an" preceding an element or step does not exclude the presence of a plurality of such elements or steps. The Figures and description are to be regarded as illustrative only and do not limit the subject-matter. Any reference sign in the claims should not be construed as limiting the scope.

## Claims

1. A beater assembly (100), comprising:
- a drive shaft (101) having a distal end (102, 108) that can be coupled to a driving member (201), the drive shaft (101) having an upper part (120) and a lower part (130), which drive shaft (101) defines a longitudinal axis (A-A) of the beater assembly (100) about which the beater assembly (100) is rotatingly drivable by the driving member (201);
- a first member (104) that is coupled to the drive shaft (101) near the upper part (120) thereof, the first member (104) comprising an arm section (104a) that extends away from the drive shaft (101);
- a second member (107) that is coupled to the drive shaft (101) near the lower part (130) thereof distanced from the first member (104) in longitudinal direction, the second member (107) comprising an arm section (107a) that extends away from the drive shaft (101), and
- a beater member (105) having a first distal end (105a) that is coupled to the arm section (104a) of the first member (104) and which beater member (105) extends between the arm section (104a) of the first member (104) and the arm section (107a) of the second member (107).

2. The beater assembly (100) according to claim 1, wherein the first member (104) and the second member (107) extend in a plane that includes the longitudinal axis (A-A) of the beater assembly (100).

3. The beater assembly (100) according to claim 2, wherein the beater member (105) has an axis of rotation (I-I) that extends substantially parallel to the longitudinal axis (A-A) of the beater assembly (100).

4. The beater assembly (100) according to any of the previous claims, wherein the second member (107) is, at least partly, formed of strip-shaped material and extends, at least partly, in a plane that is substantially perpendicular to the longitudinal axis (A-A) of the beater assembly (100).

5. The beater assembly (100) according to any of the previous claims, wherein:
- the first member (104) is detachably coupled to the drive shaft (101);
and/or
- the second member (107) is detachably coupled to the drive shaft (101);
and/or
- the first member (104) and/or the second member (107) can be coupled to the drive shaft (101) at different locations in longitudinal direction.

6. The beater assembly (100) according to any of the previous claims, wherein the beater member (105) comprises a second distal end (105b) that is coupled to the arm section (107a) of the second member (107).

7. The beater assembly (100) according to any of the previous claims, wherein
- the first member (104) comprises at least one further arm section (104b) that extends away from the drive shaft (101) in a direction different than the other arm section (104a) of the first member (104),
- the second member (107) comprises at least one further arm section (104b) that extends away from the drive shaft (101) in a direction different than the other arm section (107a) of the second member (107), and wherein a further beater member (106) is provided, having a first distal end (106a) that is coupled to the further arm section (104b) of the first member (104) and which further beater member (106) extends between the arm section (104b) of the first member (104) and the arm section (107b) of the second member (107).

8. The beater assembly (100) according to claim 7, wherein the further beater member (106) has an axis of rotation (II-II) that extends substantially parallel to the longitudinal axis (A-A) of the beater assembly (100).

9. The beater assembly (100) according to any of the claims 7 to 8, wherein the further arm section (107b) of the second member (107) is, at least partly, formed of strip-shaped material and extends, at least partly, in a plane that is substantially perpendicular to the longitudinal axis (A-A) of the beater assembly (100).

10. The beater assembly (100) according to any of the claims 7 to 9, wherein the further beater member (106) comprises a second distal end (106b) that is coupled to the further arm section (107b) of the second member (107).

11. The beater assembly according to any of the previous claims, wherein the the first member (104) is, at least partly, formed of strip-shaped material and extends, at least partly, in a plane that is substantially perpendicular to the longitudinal axis (A-A) of the beater assembly (100).

12. Beater assembly (300), comprising:
- a drive shaft (301) having a distal end (302, 308) that can be coupled to a driving member (201), the drive shaft (301) having an upper part (120) and a lower part (130), which drive shaft (301) defines a longitudinal axis (A-A) of the beater assembly (300) about which the beater assembly (300) is rotatingly drivable by the driving member (201);
- a support member (304) coupled to the lower part (130) of the drive shaft (301), the support member (304) comprising an arm section (304a) extending away from the drive shaft (301), and
- a beater member (305) having a distal end (305a) that is coupled to the arm section (304a) of the support member (304), wherein the beater member (305) extends from the arm section (304a) towards the upper part (120) of the drive shaft (301).

13. The beater assembly (300) according to claim 12, wherein:
- the beater member (305) has an axis of rotation (I-I) that extends substantially parallel to the longitudinal axis (A-A) of the beater assembly (300);
and/or
- the support member (304) is, at least partly, formed of strip-shaped material and extends, at least partly, in a plane that is substantially perpendicular to the longitudinal axis (A-A) of the beater assembly (300);
and/or
- the support member (304) is detachably coupled to the drive shaft (301).

14. The beater assembly (300) according to any of the claims 12 to 13,
- wherein the support member (304) comprises a further arm section (304b) that extends away from the drive shaft (301) in a direction different than the other arm section (304a) of the support member (304),
- wherein a further beater member (306) is provided, having a distal end (306a) that is coupled to the further arm section (304b) of the support member (104) wherein the further beater member (306) extends from the further arm section (304b) towards the upper part (120) of the drive shaft (301), and wherein, preferably, the further beater member (306) has an axis of rotation (II-II) that extends substantially parallel to the longitudinal axis (A-A) of the beater assembly (300).

15. A kitchen appliance, comprising:
- a base member, said base member housing a drive motor, which drive motor comprises a driving member (201);
- a receptacle (200) for receiving foodstuff, the receptacle (200) being positionable on the base member, and
- a beater assembly (100, 300) according to any of the previous claims, the beater assembly (100, 300) being positionable in the receptacle (200), so as to be drivingly engage the driving member (201).
